Europäisches Patentamt

European Patent Office

Office européen des brevets

(11) Numéro de publication : **0 334 717 B1**

(12) **FASCICULE DE BREVET EUROPEEN**

(45) Date de publication du fascicule du brevet :
**27.05.92 Bulletin 92/22**

(21) Numéro de dépôt : **89400707.9**

(22) Date de dépôt : **14.03.89**

(51) Int. Cl.⁵ : **F16L 37/10**

─────────────────────────────

(54) **Dispositif de raccordement.**

─────────────────────────────

(30) Priorité : **21.03.88 FR 8803628**

(43) Date de publication de la demande :
**27.09.89 Bulletin 89/39**

(45) Mention de la délivrance du brevet :
**27.05.92 Bulletin 92/22**

(84) Etats contractants désignés :
**DE ES GB IT**

(56) Documents cités :
**FR-A- 370 759**
**FR-A- 1 229 547**
**GB-A- 876 216**
**GB-A- 2 186 652**
**US-A- 3 514 129**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Petiot, Jean-Paul**
**42 route d'Orsay**
**F-91460 Marcoussis (FR)**

(74) Mandataire : **Durand, Yves Armand Louis et al**
**CABINET WEINSTEIN 20, Avenue de**
**Friedland**
**F-75008 Paris (FR)**

EP 0 334 717 B1

## Description

La présente invention a essentiellement pour objet un dispositif de raccordement de deux éléments destinés, par exemple, à véhiculer un fluide.

On connaît déjà d'après le document US-A-3 724 882, un dispositif de raccordement comportant un embout équipé de plusieurs pattes flexibles formant griffes, susceptibles de s'insérer par pénétration, sous l'action d'une cage cylindrique, dans la chair d'un tuyau emmanché sur l'embout.

Par ailleurs, le déverrouillage du raccordement entre l'embout et le tuyau est réalisé par translation de la cage cylindrique, ce qui libère les pattes de leur prise en leur permettant de s'écarter élastiquement du tuyau.

Bien que permettant un déverrouillage rapide, ce dispositif présente de nombreux inconvénients.

En effet, le retour des pattes étant conditionné par leur élasticité et leur capacité à se dégager respectivement des indentations formées dans le tuyau, ce dégagement peut être empêché par l'adhérence des pattes flexibles dans la chair du tuyau ou à cause de leur vieillissement ou de leur altération lorsque le dispositif est utilisé dans une atmosphère ou dans un environnement agressif. D'autre part, étant donné que la translation de la cage cylindrique est permise par le déplacement radial d'une partie arrière des pattes flexibles vers le corps de l'embout, cette translation peut être bloquée par l'insertion de corps solides ou d'amalgames entre les parties arrières de ces pattes et le corps de l'embout.

On connaît encore d'après le document GB-A-2 186 652 un dispositif de raccordement comme décrit dans le préambule de la revendication 1. Mais ce dispositif comporte un ressort, est donc d'une structure quelque peu compliquée et peut être sujet au blocage ce qui risque de le rendre non démontable.

La présente invention se propose de remédier à ces inconvénients en proposant un dispositif de raccordement fiable, efficace et dont le déverrouillage - peut être obtenu en toutes circonstances.

A cet effet, l'invention a pour objet un dispositif de raccordement de deux éléments destinés par exemple à véhiculer un fluide et du type comprenant un embout solidaire d'un premier élément et verrouillable par encliquetage élastique de pattes de blocage sur un organe récepteur solidaire d'un deuxième élément et déverrouillable de cet organe par l'intermédiaire d'un moyen de déverrouillage positif à rampe de poussée radiale et desdites pattes de blocage qui sont radialement flexibles et qui s'étendent parallèlement à l'axe de l'embout et aux directions d'introduction et de retrait dudit embout dans l'organe récepteur, caractérisé en ce que les pattes de blocage sont solidaires de l'embout et sont actionnables par une bague de déverrouillage montée angulairement mobile dans un plan radial sur l'embout et pourvue dans un plan radial d'au moins une rampe de poussée radiale sur les pattes de blocage pour permettre le retrait de ces pattes de l'organe récepteur.

On comprend donc que l'on réalise un dispositif de raccordement dans lequel la bague de déverrouillage qui est facilement manipulable, agit positivement sur la patte de blocage de sorte que celle-ci se dégage obligatoirement de l'organe récepteur.

On précisera encore ici que la rampe est prévue sur le pourtour externe ou interne de la bague de déverrouillage, lequel pourtour forme au moins un secteur associé à la patte de blocage, chaque secteur étant au moins partiellement de forme sensiblement elliptique pour délimiter une première zone dite zone de verrouillage dans laquelle la patte de blocage est verrouillée sur l'organe récepteur, et une deuxième zone dite de déverrouillage dans laquelle la patte de blocage est en position de retrait ou déverrouillée.

Par ailleurs, la bague de déverrouillage comporte au moins un ergot radialement saillant permettant l'actionnement et le blocage de cette bague.

D'autre part, la bague de déverrouillage est munie d'au moins une languette de blocage disposée en regard de la zone de verrouillage du secteur formant rampe, pour envelopper au moins partiellement et maintenir en position de verrouillage les pattes de blocage.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue en coupe longitudinale, faite suivant la ligne I-I de la figure 3, et qui représente un premier mode de réalisation d'un dispositif de raccordement selon l'invention, avant raccordement de l'embout sur l'organe récepteur ;

La figure 2 est une vue en coupe longitudinale similaire à la figure 1, mais représentant le dispositif selon l'invention en position raccordée ;

La figure 3 est une vue en coupe, faite suivant la ligne III-III de la figure 2 ;

La figure 4 est une vue en coupe longitudinale de ce premier mode de réalisation mais représentant les pattes de blocage en position de déverrouillage ;

La figure 5 est une vue en coupe, faite suivant la ligne V-V de la figure 4 ;

La figure 6 est une vue en coupe longitudinale d'un deuxième mode de réalisation du dispositif selon l'invention, faite suivant la ligne VI-VI de la figure 7 ;

La figure 7 est une vue en coupe, faite suivant la ligne VII-VII de la figure 6 ;

La figure 8 est une vue en coupe longitudinale d'un troisième mode de réalisation ;

La figure 9 est une vue en coupe, faite suivant la ligne IX-IX de la figure 8 ;

La figure 10 est une vue de dessus de l'embout, sans les pattes de blocage ; et

Les figures 11, 13 et 15 sont des vues en coupe longitudinales similaires à la figure 8, mais représentant respectivement le dispositif de raccordement selon le troisième mode de réalisation en position d'approche, de verrouillage et de déverrouillage, tandis que les figures 12, 14 et 16 sont des vues en coupe faites respectivement selon les lignes XII-XII, XIV-XIV et XVI-XVI des figures 11, 13 et 15 respectives.

En se reportant aux figures annexées, un dispositif de raccordement conforme à l'invention comporte un embout 1 formé d'un corps 2 essentiellement tubulaire, et qui est muni d'un alésage 3 permettant par exemple, le passage d'un fluide, non représenté.

D'autre part, le corps 2 de l'embout 1 forme par sa partie arrière 4, une partie de liaison 5 recevant sur son pourtour extérieur 6, l'extrémité 7 d'un premier élément à raccorder ou tuyau 8.

A cet effet, la partie de liaison 5 a été pourvue d'un diamètre extérieur d5 supérieur au diamètre intérieur nominal d8 du tuyau 8 pour que celui-ci soit emmanché à force sur cette partie de liaison.

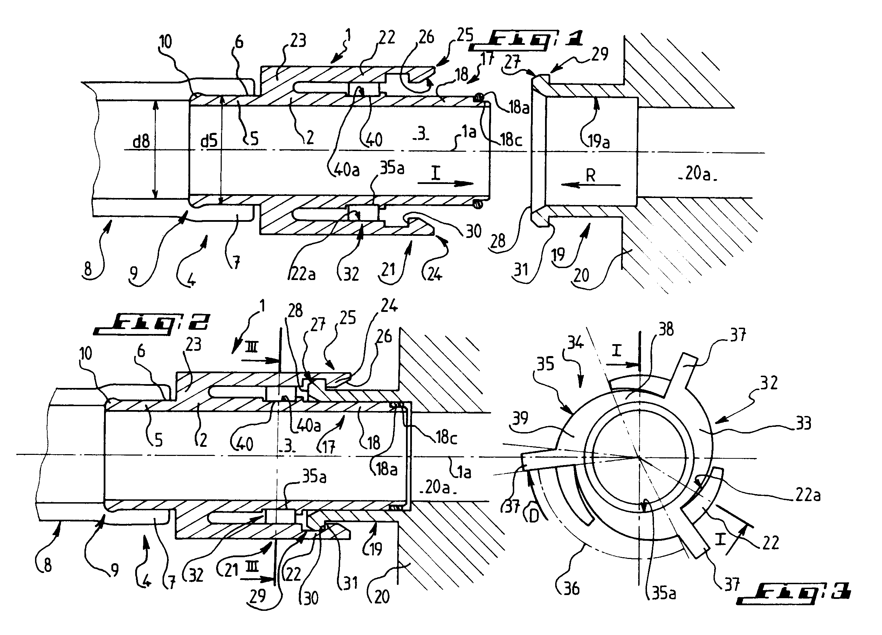

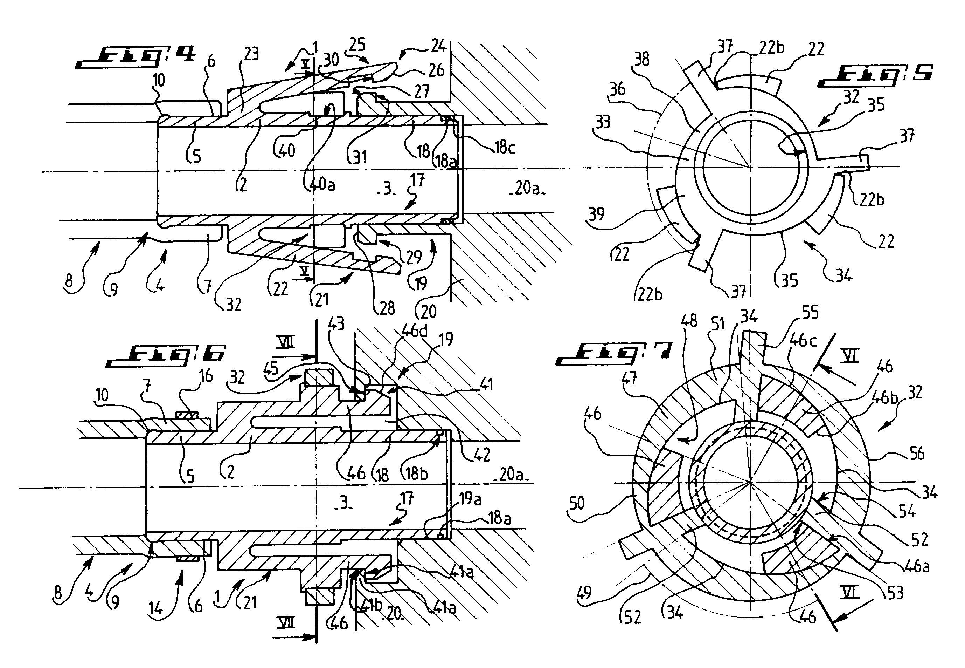

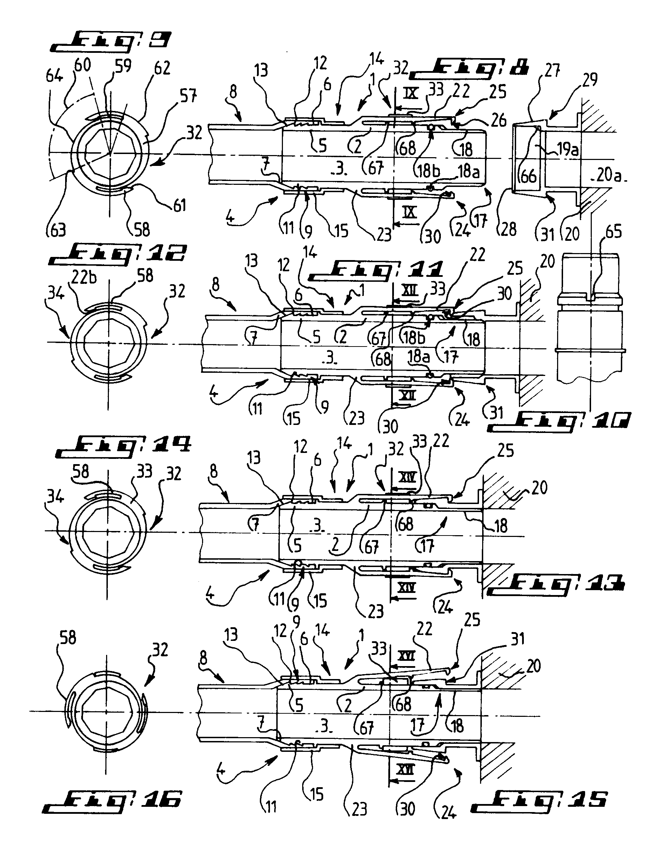

De plus, afin d'éviter un arrachement accidentel du tuyau 8, la partie de liaison 5 de l'embout 1 est pourvue d'un moyen de retenue axiale 9 réalisé, comme il a été représenté sur les figures 1 à 6, par un bourrelet ou collet circulaire 10, radialement saillant, de forme semi-torique, et qui est disposé, par exemple, à l'extrémité libre de la partie de liaison 5.

Selon un autre mode de réalisation, visible sur les figures 8 à 15, le moyen de retenue axiale 9 est constitué de plusieurs parties tronconiques 11 dont les extrémités radiales respectives 12 font saillies vers l'extérieur et pénètrent dans la chair du tuyau 8 tandis que leurs parties tronconiques 13 permettent l'introduction de la partie de liaison 5 dans ce tuyau.

D'autre part, on remarquera qu'il a été disposé sur le pourtour extérieur 6 de la partie de liaison 5, une bague 14 formant collier et dont un prolongement 15, enveloppant au moins partiellement l'extrémité 7 du tuyau 8, maintient cette extrémité 7 appliquée sur le moyen de retenue axiale 9.

Cette bague 14 peut être surmoulée sur l'ensemble prémonté, composé du tuyau 8 et de l'embout 1, de manière à obtenir un serrage au retrait et à assurer l'étanchéité nécessaire.

Par ailleurs, en se référant à la figure 6, on observera que la bague 14 formant collier a été prévue sous la forme d'un anneau 16, disposé à l'arrière du bourrelet ou collet circulaire 10 et sur l'extrémité 7 du tuyau 8, ce qui assure un serrage supplémentaire de ce tuyau sur l'embout 1.

En se référant aux trois modes de réalisation illustrés, on remarquera que le corps 2 forme par sa partie avant 17, une partie d'engagement 18 susceptible de pénétrer dans un alésage chanfreiné 19a d'un organe récepteur 19 solidaire d'un deuxième élément à raccorder 20.

Afin d'assurer l'étanchéité entre l'élément à raccorder 20 et l'embout 1, la partie d'engagement 18 est munie d'un joint torique 18a qui peut être collé sur celle-ci et logé sur une portée épaulée 18c, ou disposé dans une gorge appropriée 18b, visible sur les figures 6 et 8 à 15.

Par ailleurs, afin de permettre le blocage axial de l'embout 1 sur l'organe récepteur 19, le corps 2 de cet embout a été pourvu de moyens de verrouillage 21 constitués d'une ou plusieurs pattes de blocage radialement flexibles et qui sont sensiblement parallèles à l'axe longitudinal 1a de l'embout 1, c'est-à-dire sensiblement parallèles aux directions d'introduction et de retrait de l'embout 1 dans l'organe récepteur 19, représentées respectivement par les flèches I et R.

En se référant aux figures 1 à 5, et suivant un premier mode de réalisation, les pattes de blocage 22 sont solidaires du corps 2 de l'embout 1, au proche de sa partie arrière 5, par un pied 23 venant de matière avec le corps 2, et qui est dirigé radialement vers l'extérieur de celui-ci.

Ainsi, les pattes de blocage 22 se composent d'une partie d'accrochage 24 prévue dans leur prolongement avant 25, et dirigée vers le corps 2 de l'embout 1, cette partie d'accrochage 24 pouvant pivoter par rapport au pied 23 en constituant avec celui-ci un système à rappel élastique.

La partie d'accrochage 24 de chaque patte de blocage 22 est constituée d'un chanfrein 26, par exemple de forme partiellement tronconique, pour pouvoir coopérer avec un chanfrein 27 de forme correspondante, dirigé vers l'extérieur de l'organe récepteur 19, et réalisé sur un bord avant 28 d'une collerette 29 prévue à l'extrémité de l'organe récepteur 19.

Ainsi, lors de l'introduction de la partie d'engagement 18 dans l'alésage 19a de l'organe récepteur 19, selon la direction I, les pattes de blocage 22 sont actionnées vers l'extérieur et il se produit un escamotage de ces pattes sur la collerette 29 et un encliquetage de la partie d'accrochage 24 sur l'organe récepteur 19.

La partie d'accrochage 24 de chaque patte de blocage 22 et la collerette 29, sont munies respectivement d'épaulements 30 et 31 qui, comme il est représenté sur la figure 2, coopèrent entre eux après encliquetage de la partie d'accrochage 24, ce qui permet un blocage axial de l'embout 1 sur l'organe récepteur 19, et par conséquent, un raccordement étanche et verrouillé entre les éléments 8 et 20.

Par ailleurs, ce dispositif de raccordement est pourvu d'un moyen 32 de déverrouillage positif permettant un déplacement radial des pattes de blocage 22 pour les amener dans leur position de déverrouillage ou de retrait, comme il est représenté sur les figures 4 et 15.

Ainsi, on comprendra que les pattes de blocage 22 sont à l'état de verrouillage ou encliquetées, lorsqu'elles sont dans leur position repos, tandis qu'elles doivent être actionnées positivement par le moyen de déverrouillage 32 pour pouvoir être amenées dans une position activée à l'état de retrait ou de déverrouillage.

Le moyen de déverrouillage 32 est constitué d'une bague 33 angulairement mobile dans un plan radial de l'embout 1 et qui est munie de moyens de poussée 34 radiale disposés sous les pattes de blocage 22, comme il est visible sur les figures 1 à 5 et 8 à 16.

Ainsi, le pourtour externe 35 de la bague de déverrouillage 33 est divisé en trois secteurs 36 sensiblement égaux, associés respectivement à une patte de blocage 22. Ces secteurs 36 sont espacés par des ergots ou moyens d'actionnement 37 radialement saillants qui permettent d'agir, par exemple manuellement, sur la bague de déverrouillage 33.

De plus, les ergots 37 forment un moyen de blocage ou butée en rotation de la bague 33, en coopérant avec un bord 22b des pattes de blocage 22.

Chaque secteur 36 a une forme sensiblement et partiellement elliptique, c'est-à-dire qu'il comporte un profil progressif angulairement croissant qui délimite deux zones 38 et 39 formant rampe ou came, en contact avec la face intérieure 22a d'une patte de blocage 22 associée. Ainsi, chaque zone 38 correspond à la partie du secteur 36 de moindre rayon, et elle assure la position repos ou de verrouillage de la patte de blocage 22 tandis que la zone 39, lorsque celle-ci est amenée sous la patte de blocage 22 par rotation ou pivotement de la bague de déverrouillage 33 dans une direction D, assure la position de déverrouillage ou de retrait de la patte de blocage 22 en formant ainsi le moyen de poussée radiale 34 l'actionnant positivement.

Par ailleurs, on précisera ici que le profil de la face intérieure 22a de chaque patte de blocage 22 est prévu de telle sorte qu'il épouse parfaitement le secteur de déverrouillage 39 afin que les pattes de blocage 22 restent parfaitement droites et ne se vrillent pas au moment du déverrouillage, ce qui aurait pour conséquence de créer une incertitude dans la garde de déverrouillage et ce qui conduirait à prévoir une marge de sécurité la majorant, cette garde devant généralement rester la plus faible possible pour éviter un encombrement excessif du dispositif.

D'autre part, chaque zone de déverrouillage 39 peut être prévue de telle sorte qu'elle forme une "pente" supérieure à l'angle de frottement entre le pourtour 35 de la bague de déverrouillage 33 et la surface intérieure 22a de la patte de blocage 22 correspondante. Ainsi, l'action élastique des pattes de blocage 22 aura pour effet un rappel automatique de la bague 33 après son relâchement.

On remarquera aussi que selon ce premier mode de réalisation, la bague de déverrouillage 33 est maintenue axialement sur le corps 2 de l'embout 1 par une gorge 40 réalisée sur le pourtour extérieur du corps 2, tandis qu'elle est guidée en pivotement grâce à son pourtour interne circulaire 35a porté par le fond 40a de la gorge 40.

En se référant désormais au deuxième mode de réalisation, représenté sur les figures 6 et 7, on observera qu'il a été prévu un organe récepteur 41 qui est formé d'un chambrage 42 muni d'une paroi extérieure 41a formant lèvre et qui constitue un épaulement 43, coopérant avec un épaulement 45 des pattes flexibles 46 pour bloquer axialement l'embout dans l'organe récepteur 41.

Par ailleurs, la partie d'accrochage de chaque patte de blocage 46 est dirigée vers l'extérieur du corps 2 de l'embout 1 et elle comporte un chanfrein 46d coopérant avec un chanfrein correspondant 41b de la paroi extérieure 41a formant lèvre, pour permettre lors de l'introduction de l'embout 1, l'encliquetage des moyens de verrouillage 21.

D'autre part, on remarquera que les moyens de verrouillage 21 sont constitués par des pattes de blocage 46 actionnées par un moyen de déverrouillage 32 formé d'une bague de déverrouillage 47 qui les pousse vers le corps 2 de l'embout 1.

A cet effet, la bague de déverrouillage 47 est pourvue d'un pourtour interne 48 formant trois secteurs 49 associés respectivement à une patte de blocage 46.

Chaque secteur 49 a un profil sensiblement elliptique et il délimite deux zones, une zone de verrouillage 50 correspondant à la position verrouillée ou encliquetée des pattes de blocage 46 et une zone de déverrouillage 51 correspondant à leur position de retrait ou déverrouillée.

Ainsi, on remarquera que dans ce deuxième mode de réalisation, les pattes de blocage 46 sont prévues à l'intérieur de la bague de déverrouillage 47 tandis que dans le premier mode de réalisation, la bague de déverrouillage 33 est prévue sous les pattes de blocage 22, et entre celles-ci et le corps de l'embout 2.

Par conséquent, la face extérieure 46c des pattes de blocage 46 est en contact avec le pourtour interne 48 de la bague de déverrouillage 47.

D'autre part, il est prévu entre chaque secteur 49, des pattes de guidage 52 dont les faces latérales 53 et 54 forment des butées de la bague de déverrouillage 47 lorsque ces faces coopèrent avec les bords respectifs 46a et 46b des pattes de blocage 46.

De plus, les pattes de guidage 52 reposent sur le pourtour extérieur cylindrique du corps 2 de l'embout 1, ce qui assure le guidage en rotation de la bague de déverrouillage 47.

D'autre part, la bague de déverrouillage 47 a été munie d'ergots radialement saillants 55, prévus par exemple dans le prolongement des pattes de guidage 52 et qui permettent l'actionnement, notamment manuel, de la bague de déverrouillage 47.

Bien entendu, ces ergots peuvent être remplacés par un moletage formé sur le pourtour extérieur 56 de cette bague.

En se référant désormais aux figures 8 à 16 qui représentent un troisième mode de réalisation, on remarquera que le moyen de déverrouillage 32 est formé d'une bague de déverrouillage 57 pourvue de languettes de blocage 58 disposées en regard de la zone de verrouillage 59 de l'un des deux secteurs 60 formant rampe ou came, pour envelopper au moins partiellement et maintenir en position de verrouillage la patte de blocage 22.

D'autre part, la languette de blocage 58 est munie à son extrémité libre d'un renflement longitudinal 61 bloquant en rotation la bague de déverrouillage 57.

D'autre part, on remarquera que la partie arrière 62 des languettes de blocage 58, forme un talon 63, adjacent à la zone 64 de déverrouillage, lequel talon 63 en coopérant avec un bord 22b d'une des pattes de blocage 22, forme une butée en rotation de la bague de déverrouillage 57.

Par ailleurs, dans ce troisième mode de réalisation, il a été prévu sur le corps 2 de l'embout 1 une fente longitudinale 65, visible sur les figures 8, 10 et 11, et dans laquelle vient s'emboîter un ergot de positionnement 66 réalisé au fond de l'alésage 19a de l'organe récepteur 19.

Ainsi, lorsque l'embout 1 et l'organe récepteur 19 sont emboîtés, le dispositif est bloqué en rotation et l'embout 1 et l'organe récepteur 19 ne peuvent pivoter relativement.

De même, on notera que la bague de déverrouillage 57 est maintenue axialement sur l'embout 1, d'une part, par un épaulement 67 prévu sur le pourtour extérieur du corps 2, et d'autre part, par un doigt ou butée 68 réalisé sur la face intérieure 22a des pattes de blocage 22.

Dans les trois modes de réalisation qui viennent d'être décrits, l'organe récepteur 19 a été prévu sur un élément à raccorder 20 muni d'un alésage 20a recevant le fluide du premier élément ou tuyau 8, par l'intermédiaire de l'alésage 3 de l'embout 1.

Dans les exemples représentés, l'élément à raccorder 20 est une partie d'un corps d'organe de véhicule tel qu'un bloc moteur ou un carburateur, le tuyau 8 étant par exemple, une durite d'alimentation.

Bien entendu, l'organe récepteur 19 peut être muni d'une partie de liaison similaire à la partie de liaison 5 de l'embout 1, pour recevoir l'extrémité d'un second tuyau, non représenté.

D'autre part, les éléments à raccorder peuvent être des fils ou éléments électriquement conducteurs, des broches de liaison électrique étant disposées de façon appropriée d'une part, dans l'embout 1, et d'autre part dans le corps de l'organe récepteur 19.

## Revendications

1. Dispositif de raccordement de deux éléments destinés par exemple à véhiculer un fluide et du type comprenant un embout (1) solidaire d'un premier élément (8) et verrouillable par encliquetage élastique de pattes de blocage (22, 46) sur un organe récepteur (19) solidaire d'un deuxième élément (20) et déverrouillable de cet organe par l'intermédiaire d'un moyen de déverrouillage positif à rampe de poussée radiale et desdites pattes de blocage qui sont radialement flexibles (22, 46) et qui s'étendent parallèlement à l'axe de l'embout (1) et aux directions d'introduction et de retrait dudit embout dans l'organe récepteur (19), caractérisé en ce que les pattes de blocage (22, 46) sont solidaires de l'embout (1) et sont actionnables par une bague de déverrouillage (33, 47, 57) montée angulairement mobile dans un plan radial sur l'embout (1) et pourvue dans un plan radial d'au moins une rampe (38, 39) de poussée - radiale sur les pattes de blocage (22, 46) pour permettre le retrait de ces pattes de l'organe récepteur (19).

2. Dispositif selon la revendication 1, caractérisé en ce que la rampe (38, 39) est prévue sur le pourtour externe (35) ou interne (48) de la bague de déverrouillage (33, 47, 57), lequel pourtour forme au moins un secteur associé à la patte de blocage, chaque secteur (36, 49, 60) étant au moins partiellement de forme sensiblement elliptique pour délimiter une première zone (38, 50, 59) dite zone de verrouillage dans laquelle la patte de blocage est verrouillée sur l'organe récepteur (19) et une deuxième zone (39, 51, 64) dite de déverrouillage, dans laquelle la patte de blocage est en position de retrait ou déverrouillée.

3. Dispositif selon la revendication 1 ou 2, caractérisé en ce que la bague de déverrouillage (33, 47) comporte au moins un ergot radialement saillant (37, 55) permettant l'actionnement et le blocage de cette bague.

4. Dispositif selon l'une des revendications 1 à 3, caractérisé en ce que la bague de déverrouillage (57) est munie d'au moins une languette de blocage (58) disposée en regard de la zone de verrouillage (59) du secteur (60) formant rampe pour envelopper au moins partiellement et maintenir en position de verrouillage les pattes de blocage (22).

## Patentansprüche

1. Vorrichtung zur Verbindung von zwei z.B. zur Beförderung eines fliessfähigen Mittels bestimmten Elementen und derjenigen Gattung mit einem, mit einem ersten Element (8) fest verbundenen Endstück (1), das durch elastisches Einrasten von Sperransätzen (22,46) an einem mit einem zweiten Element (20) festverbundenen Aufnahmeglied (19) verriegelbar und von diesem Glied über ein positives Entriegelungsmittel mit radialer Schubrampe und von den besagten Sperransätzen (22,46), die radial biegsam und die sich paralell zur Achse des Endstückes (1) und zu den Richtungen zum Einführen und zum Herausnehmen des besagten Endstückes in das Aufnahmeglied (19) erstrecken, entriegelbar ist, dadurch. gekennzeichnet, dass die Sperransätze (22,46) mit dem Endstück (1) fest verbunden sind und durch einen in einer Radialebene an dem Endstück (1) winkelartig beweglich angeordneten und in einer Radialebene mit wenigstens einer Rampe (38,39) zur Ausübung eines radialen Schubes auf die Sperransätze (22,46) um das Lösen dieser Ansätze von dem Aufnahmeglied (19) zu gestatten, versehenen Entriegelungsring (33,47,57) betätigbar sind.

2. Vorrichtung nach Anspruch 1, dadurch gekennzeichnet, dass die Rampe (38,39) an dem Aussen-oder Innenumfang (35,48) des Entriegelungsringes (33,47,57) vorgesehen ist, welcher Umfang wenigstens einen dem Sperransatz zugeordneten Sektor bildet, wobei jeder Sektor (36, 49, 60) wenigstens teilweise etwa elliptischer Gestalt ist, um einen ersten sogenannten Verriegelungsbereich (38,50,59), in welchem der Sperransatz an dem Aufnahmeglied (19) verriegelt ist und einen zweiten sogenannten Entriegelungsbereich (39, 51, 64) in welchem der Sperransatz in zurückgestellter bzw. entriegelter Lage ist, abzugrenzen.

3. Vorrichtung nach Anspruch 1 oder 2, dadurch gekennzeichnet, dass der Entriegelungsring (33,47) wenigstens eine die Betätigung und die Sperrung dieses Ringes gestattende radial vorspringende Knagge (37,55) aufweist.

4. Vorrichtung nach einem der Ansprüche 1 bis 3, dadurch gekennzeichnet, dass der Entriegelungsring (57) mit wenigstens einer Sperrzunge (58) versehen ist, die gegenüber dem Verriegelungsbereich (59) des rampenförmigen Sektors (60) angeordnet ist, um die Sperransätze (22) wenigstens teilweise zu Umhüllen und in Verriegelungsstellung zu halten.

## Claims

1. Device for coupling two elements adapted for example to carry a fluid and of the type comprising an end part (1) made fast to a first element (8) and lockable through elastic interlocking of blocking lugs (22,46) onto a receiving member (19) made fast to a second element (20) and unlockable from this member through the medium of a positive unlocking means with a radial thrust ramp and from the said blocking lugs which are radially flexible (22,46) and which extend in parallel relation to the axis of the end part (1) and to the directions of insertion and of withdrawal of the said end part in the receiving member (19), characterized in that the blocking lugs (22,46) are solid with the end part (1) and are operable by an unlocking ring (33,47,57) mounted in angularly movable relationship in a radial plane onto the end part (1) and provided in a radial plane with at least one ramp (38,39) for exerting a radial thrust upon the blocking lugs (22,46) to allow the withdrawal of these lugs from the receiving member (19).

2. Device according to claim 1, characterized in that the ramp (38,39) is provided on the external periphery (35) or internal periphery (48) of the unlocking ring (33,47,57), which periphery forms at leat one sector associated with the blocking lug, each sector (36,49,60) being at least partially of a substantially elliptic shape to define a first zone (38,50,59) called locking zone in which the blocking lug is locked onto the receiving member (19) and a second so-called unlocking zone (39,51,64) in which the blocking lug is in a withdrawal or unlocked position.

3. Device according to claim 1 or 2, characterized in that the unlocking ring (33,47) comprises at least one radially projecting snug (37,55) allowing the actuation and the blocking of this ring.

4. Device according to one of claims 1 to 3, characterized in that the unlocking ring (57) is provided with at least one blocking tongue (58) disposed to be facing the locking zone (59) of the ramp-forming sector (60) for enveloping at least partially and retaining in the locking position the blocking lugs (22).

Fig. 1

Fig. 2

Fig. 3

EP 0 334 717 B1

Fig. 4

Fig. 5

Fig. 6

Fig. 7

EP 0 334 717 B1

EP 0 334 717 B1

Fig. 9 — Fig. 8 — Fig. 12 — Fig. 11 — Fig. 10 — Fig. 14 — Fig. 13 — Fig. 16 — Fig. 15

9